(19) **Europäisches Patentamt / European Patent Office / Office européen des brevets**

(11) **EP 3 809 627 B1**

(12) **FASCICULE DE BREVET EUROPEEN**

(45) Date de publication et mention de la délivrance du brevet:
**13.07.2022 Bulletin 2022/28**

(21) Numéro de dépôt: **20196710.6**

(22) Date de dépôt: **17.09.2020**

(51) Classification Internationale des Brevets (IPC):
**H04L 9/30** *(2006.01)*    **H04L 9/08** *(2006.01)*

(52) Classification Coopérative des Brevets (CPC):
**H04L 9/0841; H04L 9/3066;** H04L 9/0844

(54) **PROCÉDÉ DE GÉNÉRATION D'UNE CLÉ PUBLIQUE ET ENTITÉ ÉLECTRONIQUE ASSOCIÉE**

VERFAHREN UND VORRICHTUNG ZUR ERZEUGUNG EINES ÖFFENTLICHEN SCHLÜSSELS

PUBLIC KEY GENERATION METHOD AND APPARATUS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.10.2019 FR 1911511**

(43) Date de publication de la demande:
**21.04.2021 Bulletin 2021/16**

(73) Titulaire: **IDEMIA France**
**92400 Courbevoie (FR)**

(72) Inventeur: **RONDEPIERRE, Franck**
**92100 Boulogne-Billancourt (FR)**

(74) Mandataire: **Idemia**
**2, place Samuel de Champlain**
**92400 Courbevoie (FR)**

(56) Documents cités:
**WO-A1-2018/044146**

- **JOHANNES BRAUN ET AL: "iPIN and mTAN for Secure eID Applications", 9 avril 2012 (2012-04-09), INFORMATION SECURITY PRACTICE AND EXPERIENCE, SPRINGER BERLIN HEIDELBERG, BERLIN, HEIDELBERG, PAGE(S) 259 - 276, XP019175206, ISBN: 978-3-642-29100-5 * alinéa [02.1] * * figure 2 ***
- **CERTICOM RESEARCH: "Standards for Efficient Cryptography, SEC 1: Elliptic Curve Cryptography", INTERNET CITATION, 20 septembre 2000 (2000-09-20), XP003011889, Extrait de l'Internet: URL:http://www.secg.org/download/aid-385/sec1_final.pdf [extrait le 2007-01-01]**
- **ICART THOMAS ED - ANDO N ET AL: "How to Hash into Elliptic Curves", 16 août 2009 (2009-08-16), INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 303 - 316, XP047343727, ISBN: 978-3-642-17318-9 * le document en entier ***

EP 3 809 627 B1

**Description**

La présente invention concerne le domaine technique de la cryptographie.

Elle concerne plus particulièrement un procédé de génération d'une clé publique, selon la revendication 1, et une entité électronique associée, selon la revendication 10.

Une mise en oeuvre particulière de l'invention concerne un procédé de construction d'un secret partagé, selon la revendication 9.

D'autres mises en oeuvre particulières de l'invention sont revendiquées dans les revendications 2 à 8.

Certains protocoles de cryptographie sur courbe elliptique, tel que le protocole PACE, proposent de générer une clé publique au moyen d'un processus comprenant deux étapes :

- on construit tout d'abord, de manière aléatoire, un point de la courbe elliptique utilisable ensuite en tant que générateur éphémère ;
- on génère la clé publique en multipliant ce générateur éphémère par un scalaire appartenant à un corps fini et formant alors une clé privée.

L'étape de construction du générateur éphémère comprend en général elle aussi au moins une multiplication d'un point de la courbe elliptique par un scalaire (élément du corps fini) et la génération de la clé publique est donc relativement coûteuse en termes de calcul sur la courbe elliptique.

Ce type de protocole est décrit par example dans le document JOHANNES BRAUN ET AL: "iPIN and mTAN for Secure eID Applications", 9 avril 2012 (2012-04-09), INFORMATION SECURITY PRACTICE AND EXPERIENCE, SPRINGER BERLIN HEIDELBERG, BERLIN, HEIDELBERG, PAGE(S) 259 - 276, ISBN: 978-3-642-29100-5.

Dans ce contexte, l'invention propose un procédé de génération d'une clé publique égale au produit d'un générateur éphémère par un scalaire formant une clé privée, le générateur éphémère étant un point d'une courbe elliptique et la clé privée étant un élément d'un corps fini, caractérisé en ce qu'il comprend les étapes suivantes :

- obtention d'un nombre par multiplication, dans le corps fini, de la clé privée par un autre élément du corps fini ;
- obtention de la clé publique en effectuant un traitement impliquant au moins le produit d'un autre point de la courbe elliptique par le nombre obtenu.

On privilégie ainsi les multiplications dans le corps fini (dont le coût calculatoire est inférieur à celui des multiplications de points de la courbe elliptique par un scalaire) et on limite de ce fait le nombre de multiplications de points de la courbe elliptique par un scalaire à effectuer. On peut ainsi obtenir la clé publique sans avoir à déterminer l'élément générateur en tant que tel.

Selon d'autres caractéristiques envisageables à titre optionnel :

- le procédé comprend une étape de détermination de l'autre élément par tirage aléatoire ;
- la courbe elliptique est définie par un ensemble de paramètres comprenant un cofacteur et/ou un générateur (ce générateur étant donc prédéterminé et pouvant être en pratique mémorisé dans l'entité électronique mettant en oeuvre le procédé de génération) ;
- l'autre point de la courbe elliptique est ledit générateur ;
- le procédé comprend une étape de réception de données représentant l'autre point en provenance d'un partenaire de communication (ce partenaire de communication étant par exemple une autre entité électronique, en communication avec l'entité électronique mettant en œuvre le procédé de génération via un canal de communication) ;
- le procédé comprend une étape d'obtention d'un autre nombre par multiplication, dans le corps fini, de la clé privée par un élément supplémentaire du corps fini ;
- ledit traitement est conçu pour déterminer la somme, sur la courbe elliptique, du produit du générateur par l'autre nombre, et du produit de l'autre point par ledit nombre obtenu ;
- l'autre élément est le cofacteur susmentionné ;
- le procédé comprenant une étape d'obtention de l'autre point par application d'une fonction de hachage ayant un ensemble image inclus dans la courbe elliptique.

L'invention propose également un procédé de construction d'un secret partagé entre un premier partenaire de communication et un second partenaire de communication, comprenant les étapes suivantes :

- génération, par le premier partenaire de communication, d'une première clé publique au moyen d'un procédé de génération de clé publique tel que proposé ci-dessus ;

- émission, par le premier partenaire de communication, de la première clé publique à destination du second partenaire de communication ;

- réception, par le premier partenaire de communication, d'une seconde clé publique en provenance du second partenaire de communication ;

- construction du secret partagé en effectuant le produit de la seconde clé publique par ladite clé privée.

Un tel secret partagé peut ensuite être utilisé au sein d'un algorithme cryptographique mis en œuvre par le premier partenaire de communication ou par le second partenaire de communication.

Le premier partenaire de communication est par exemple une première entité électronique, telle qu'une carte à microcircuit et/ou un document électronique d'identité. Le second partenaire de communication est par exemple une seconde entité électronique, tel qu'un terminal (éventuellement réalisé sous forme d'un lecteur de carte).

Enfin, l'invention propose une entité électronique apte à générer une clé publique égale au produit d'un générateur éphémère par un scalaire formant une clé privée, le générateur éphémère étant un point d'une courbe elliptique et la clé privée étant un élément d'un corps fini, caractérisée en ce qu'elle comprend un processeur programmé pour :

- obtenir un nombre par multiplication, dans le corps fini, de la clé privée par un autre élément du corps fini ; et pour

- obtenir la clé publique en effectuant un traitement impliquant au moins le produit d'un autre point de la courbe elliptique par le nombre obtenu.

Le processeur est par exemple programmé (comme il vient d'être indiqué) au moyen d'instructions de programme d'ordinateur mémorisées dans une mémoire (par exemple non volatile, éventuellement réinscriptible) de l'entité électronique et conçues pour mettre en œuvre tout ou partie du procédé de génération de clé publique et/ou du procédé de construction d'un secret partagé proposés ci-dessus lorsque ces instructions sont exécutées par le processeur susmentionné.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

De plus, diverses autres caractéristiques de l'invention ressortent de la description annexée effectuée en référence aux dessins qui illustrent des formes, non limitatives, de réalisation de l'invention et où :

- la figure 1 représente un système comprenant des entités électroniques conçues pour communiquer entre elles ;

- la figure 2 est un logigramme illustrant un premier exemple de procédé de génération de clé publique et de construction de secret partagé conforme à l'invention ; et

- la figure 3 est un logigramme présentant un second exemple de procédé de génération de clé publique et de construction de secret partagé conforme à l'invention.

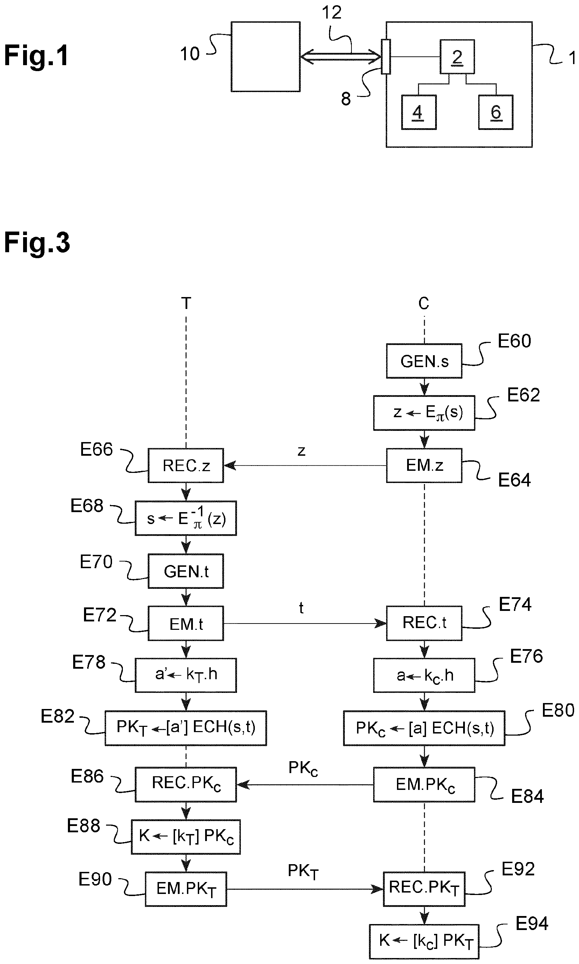

La figure 1 représente schématiquement une première entité électronique 1 et une seconde entité électronique 10 conçues pour échanger des données via un canal de communication 12. La première entité électronique 1 et la seconde entité électronique 10 forment donc respectivement un premier partenaire de communication et un second partenaire de communication.

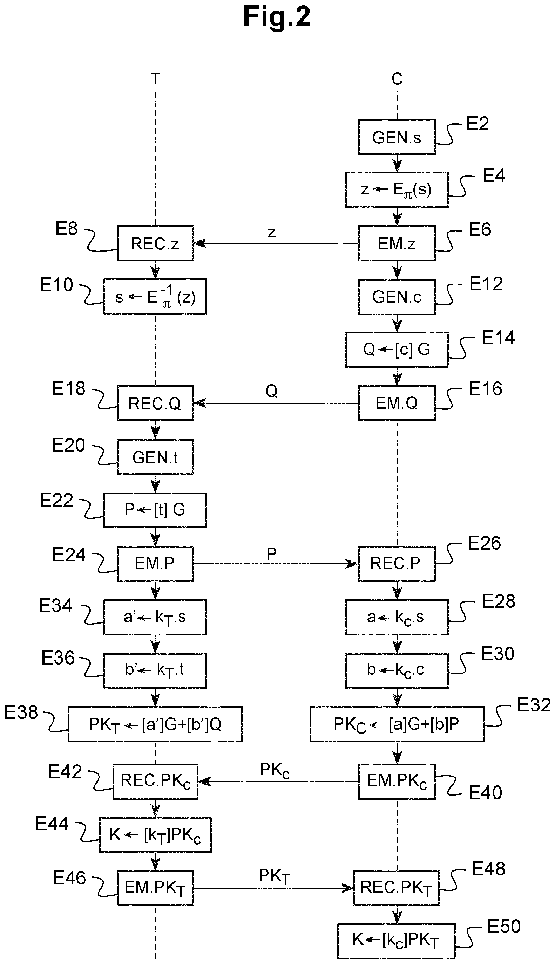

La première entité électronique 1 est par exemple une carte à microcircuit (d'où la référence C utilisée sur les figures 2 et 3), telle qu'une carte à circuit intégré universelle (ou UICC pour *"Universal Integrated Circuit Card"*) ou une carte bancaire. Sous cette forme ou sous une des autres formes envisageables comme indiqué ci-dessous, la première entité électronique 1 peut former un document électronique d'identité.

Selon une autre possibilité de réalisation, la première entité électronique 1 pourrait être un élément sécurisé (ou SE pour *"Secure Element"*) - par exemple un microcontrôleur sécurisé ; un tel élément sécurisé est par exemple intégré à un dispositif électronique portatif (ou *"hand-held electronic device"* selon l'appellation anglo-saxonne), tel qu'un terminal de communication ou un passeport électronique. Selon une autre variante encore, l'entité électronique 1 pourrait être un ordinateur ou un module matériel de sécurité (ou HSM pour "Hardware Security Module").

La première entité électronique 1 comprend un processeur 2 (ici un microprocesseur), une mémoire vive 4 et une mémoire non-volatile réinscriptible 6 (par exemple de type EEPROM pour *"Electrically Erasable and Programmable Read-Only Memory"*). La première entité électronique 1 pourrait éventuellement comprendre en outre une mémoire morte. La mémoire vive 4 et la mémoire non-volatile réinscriptible 6 (ainsi que le cas échéant la mémoire morte) sont chacune liées au processeur 2 de sorte que le processeur 2 peut lire ou écrire des données dans chacune de ces mémoires 4, 6.

Une de ces mémoires, par exemple la mémoire non-volatile réinscriptible 6, mémorise des instructions de programme d'ordinateur, dont certaines permettent la mise en œuvre par la première entité électronique 1 d'étapes du procédé décrit ci-dessous en référence à la figure 2 ou à la figure 3, lorsque ces instructions sont exécutées par le processeur 2.

Les mémoires 4, 6 stockent également des données représentatives de valeurs utilisées lors de la mise en œuvre de ces étapes. La mémoire non-volatile réinscriptible 6 mémorise en particulier une clé privée $k_C$ (utilisée comme décrit plus bas).

Comme expliqué plus bas, la première entité électronique 1 est conçue (ici grâce à certaines des instructions mémorisées dans une mémoire 4, 6 de l'entité électronique 1 et exécutables par le processeur 2 de l'entité électronique) pour mettre en œuvre un procédé de génération d'une clé publique $PK_C$ et/ou de construction d'un secret partagé K ; cette clé publique $PK_C$ et/ou ce secret partagé K peuvent ensuite être utilisés au sein d'un algorithme de traitement cryptographique. La première entité électronique 1 peut donc former un dispositif de traitement cryptographique.

La première entité électronique 1 comprend en outre une interface de communication 8 pour échanger des données avec des dispositifs électroniques externes, en particulier via le canal de communication 12 avec la seconde entité électronique 10.

Dans le cas décrit ici où l'entité électronique 1 est une carte à microcircuit, l'interface de communication 8 comprend par exemple des contacts affleurant sur une face de la carte à microcircuit. En variante, l'interface de communication 8 pourrait être réalisée par un module de communication sans contact. De manière générale, l'interface de communication 8 peut être un module de communication (filaire ou sans fil) avec une autre entité électronique.

La seconde entité électronique 10 est par exemple un terminal (d'où la référence T utilisée sur les figures 2 et 3) conçu pour échanger des données avec la première entité électronique 1 via le canal de communication 12.

Bien que cela ne soit pas décrit ici en détail, la seconde entité électronique 10 peut être conçue elle aussi sur la base d'une architecture à microprocesseur.

La première entité électronique 1 et la seconde entité électronique 10 sont chacune conçues (en pratique programmées) pour effectuer des calculs sur une courbe elliptique E prédéfinie.

La courbe elliptique E est définie par des paramètres (en particulier un cofacteur h et/ou un générateur G) dont certains sont mémorisés dans l'une au moins des première et seconde entités électroniques 1, 10.

Le générateur G est un point de la courbe elliptique E qui permet de définir un groupe (dit groupe elliptique) d'ordre n sur la courbe elliptique E. Le cofacteur h déjà mentionné est défini de sorte que le cardinal (ou ordre) de la courbe elliptique E (c'est-à-dire le nombre de points formant la courbe elliptique E) est égal au produit de l'ordre n par le cofacteur h.

On note "+" l'opération d'addition définie au sein du groupe elliptique susmentionné. Par ailleurs, les points de la courbe elliptique E sont par exemple représentés au sein des première et seconde entités électroniques au moyen de coordonnées affines et/ou au moyen de coordonnées projectives (X, Y, Z), par exemple des coordonnées projectives jacobiennes (chacune des première et seconde entités électroniques pouvant effectuer une conversion de coordonnées affines en coordonnées projectives, et réciproquement).

Chacune des première et seconde entités électroniques 1, 10 (c'est-à-dire en pratique un processeur équipant ces entités électroniques 1, 10, tel que le processeur 2) est conçue (en pratique : le processeur est programmé au moyen d'instructions mémorisés dans une mémoire de l'entité électronique telle que la mémoire non volatile 6) pour effectuer des additions entre points de la courbe elliptique E (c'est-à-dire au sein du groupe elliptiques précité), en pratique au moyen de calculs sur les coordonnées projectives des points à additionner.

On note A + B l'addition de deux points A et B de la courbe elliptique E.

Chacune des première et seconde entités électroniques 1, 10 (c'est-à-dire en pratique un processeur équipant ces entités électroniques 1, 10, tel que le processeur 2) est par ailleurs conçue (en pratique : le processeur est programmé au moyen d'instructions mémorisés dans une mémoire de l'entité électronique telle que la mémoire non volatile 6) pour effectuer des produits d'un point de la courbe elliptique E par un scalaire élément d'un corps fini F, en pratique au moyen de calculs sur les coordonnées projectives du points à multiplier par ce scalaire.

On note $[m]\,A$ le produit d'un point A de la courbe elliptique E par un scalaire m élément du corps fini F.

La figure 2 est un logigramme illustrant un premier exemple de procédé de génération d'une clé publique $PK_C$ et de construction d'un secret partagé K conforme à l'invention.

Comme cela ressortira de l'explication qui suit, ce procédé permet de produire le secret partagé K en conformité avec le protocole PACE dans le cas de l'utilisation du processus dénommé *"Generic Mapping"*.

Le procédé débute par une étape E2 de génération par tirage aléatoire d'un premier nombre aléatoire s au sein de la première entité électronique 1 (cette étape étant donc ici mise en œuvre par le processeur 2).

La première entité électronique 1 (en pratique le processeur 2) applique alors au premier nombre aléatoire s un algorithme cryptographique de chiffrement $E_\pi$ (étape E4) de manière à obtenir une version chiffrée z du première nombre aléatoire s : $z = E_\pi\,(s)$. L'algorithme de chiffrement $E_\pi$ utilisé par la première entité électronique 1 peut être lié en pratique à un mot de passe $\pi$, qui correspond par exemple à des caractères imprimés sur la première entité électronique 1 (lorsque cette première entité électronique 1 est un document électronique d'identité) ou sur un document électronique d'identité équipé de la première entité électronique 1.

La première entité électronique 1 émet la version chiffrée z sur le canal de communication 12 (c'est-à-dire via l'interface de communication 8) à destination de la seconde entité électronique 10 (étape E6).

La version chiffrée z est reçue par la seconde entité électronique 10 à l'étape E8.

La seconde entité électronique 10 applique alors un algorithme cryptographique de déchiffrement $E_\pi^{-1}$ à la version chiffrée z (étape E10) afin d'obtenir le premier nombre aléatoire s. L'algorithme cryptographique de déchiffrement $E_\pi^{-1}$ est donc l'algorithme inverse de l'algorithme de chiffrement En.

Dans l'exemple décrit ici, la seconde entité électronique 10 reçoit le mot de passe $\pi$ (par exemple par saisie sur une interface utilisateur de la seconde entité électronique 10, ici un terminal T comme déjà indiqué, ou par lecture du mot de passe $\pi$ sur la première entité électronique 1 au moyen d'un dispositif de lecture optique, en particulier lorsque le mot de passe π correspond par exemple à des caractères imprimés sur la première entité électronique 1 comme indiqué plus haut).

La seconde entité électronique 10 peut ainsi déterminer l'algorithme cryptographique de déchiffrement $E_\pi^{-1}$ en fonction du mot de passe π reçu. (En pratique, le mot de passe π est appliqué, en sus de la version chiffrée z, comme paramètre d'une fonction cryptographique prédéfinie.)

La première entité électronique 1 (en pratique le processeur 2) génère par ailleurs à l'étape E12 un second nombre aléatoire c par tirage aléatoire.

La première entité électronique 1 (en pratique le processeur 2) peut alors déterminer à l'étape E14 un premier point Q en effectuant le produit du générateur G par le second nombre aléatoire c :
Q = [c] G.

La première entité électronique 1 émet le premier point Q (c'est-à-dire par exemple en pratique des données représentant les coordonnées affines du premier point Q) sur le canal de communication 12 (c'est-à-dire via l'interface de communication 8) à destination de la seconde entité électronique 10 (étape E16).

Le premier point Q est reçu par la seconde entité électronique 10 à l'étape E18.

La seconde entité électronique 10 génère un troisième nombre aléatoire t par tirage aléatoire (étape E20).

La seconde entité électronique 10 peut alors déterminer à l'étape E22 un second point P en effectuant le produit du générateur G par le troisième nombre aléatoire t : P = [t] G.

La seconde entité électronique 10 émet le second point P (c'est-à-dire par exemple en pratique des données représentant les coordonnées affines du second point P) sur le canal de communication 12 à destination de la première entité électronique 10 (étape E24).

Le second point P est reçu par la première entité électronique 1 (précisément par le processeur 2) via l'interface de communication 8 à l'étape E26.

La première entité électronique 1 (en pratique le processeur 2) détermine à l'étape E28 un premier nombre intermédiaire a en multipliant la clé privée kc par le premier nombre aléatoire s : a = kc.s . Cette multiplication s'entend dans le corps fini F. Comme déjà indiqué, la clé privée kc est ici mémorisée dans la première entité électronique 1, par exemple dans la mémoire non-volatile réinscriptible 6. En variante, la clé privée $k_C$ pourrait être une clé privée éphémère, obtenue par tirage aléatoire (au sein de la première entité électronique 1, en pratique par le processeur 2) préalablement à l'étape E28.

La première entité électronique 1 (en pratique le processeur 2) détermine à l'étape E30 un second nombre intermédiaire b en multipliant la clé privée kc par le second nombre aléatoire c : b = $k_C$.c . Cette multiplication s'entend dans le corps fini F.

La première entité électronique 1 (en pratique le processeur 2) peut ainsi déterminer à l'étape E32 une première clé publique $PK_C$ égale à la somme du produit du générateur G par le premier nombre intermédiaire a, et du produit du second point P par le second nombre intermédiaire b :

$$PK_C = [a] G + [b] P.$$

La détermination de la première clé publique $PK_C$ à l'étape E32 est par exemple réalisée au moyen d'un algorithme de double multiplication, à savoir un algorithme prenant en entrée le premier nombre intermédiaire a, le second nombre intermédiaire b, le générateur G et le second point P, et produisant en sortie la somme précité [a] G + [b] P. Un tel algorithme est par exemple décrit dans la présentation "Scalar-multiplication algorithms", de P. Schwabe, Radboud University Nijmegen, Pays-Bas, ECC 2013 Summer School, 11 septembre 2013.

La première clé publique PKc vérifie : PKc = [kc.s] G + [kc.c] P = [kc] $^\ulcorner$, où $^\ulcorner$ est un générateur éphémère égal à [s] G + [c] P selon la version du protocole PACE utilisant le processus dit *"Generic Mapping"*.

La première clé publique $PK_C$ est donc bien une clé publique éphémère telle que prévue par le protocole PACE.

On remarque que le procédé qui vient d'être décrit ne prévoit pas le calcul du générateur éphémère $^\ulcorner$, mais l'obtention directe de la première clé publique PKc, ce qui réduit le nombre de multiplications d'un point de la courbe elliptique E par un scalaire à effectuer.

La seconde entité électronique 10 détermine à l'étape E34 un troisième nombre intermédiaire a' en multipliant une clé privée $k_T$ mémorisée dans la seconde entité électronique 10 par le premier nombre aléatoire s : a' = $k_T$.s . Cette multiplication s'entend dans le corps fini F. En pratique, la clé privée $k_T$ peut être une clé privée éphémère, obtenue par exemple par tirage aléatoire au sein de la seconde entité électronique 10.

La seconde entité électronique 10 détermine à l'étape E36 un quatrième nombre intermédiaire b' en multipliant la clé privée $k_T$ par le troisième nombre aléatoire t : b' = $k_T$.t . Cette multiplication s'entend dans le corps fini F.

La seconde entité électronique 10 peut alors déterminer à l'étape E38 une seconde clé publique $PK_T$ égale à la somme du produit du générateur G par le troisième nombre intermédiaire a', et du produit du premier point Q par le quatrième nombre intermédiaire b' :

$$PK_T = [a'] G + [b'] Q.$$

Comme pour l'étape E32, la détermination de la seconde clé publique $PK_T$ à l'étape E38 est par exemple réalisée au moyen d'un algorithme de double multiplication, à savoir un algorithme prenant en entrée le troisième nombre intermédiaire a', le quatrième nombre intermédiaire b', le générateur G et le premier point Q, et produisant en sortie la somme précitée [a'] G + [b'] Q, tel que décrit dans la présentation précitée.

La seconde clé publique $PK_T$ vérifie : $PK_T =$ $[k_T.s] G + [k_T.t] Q = [k_T]^{\ulcorner}$, où $^{\ulcorner}$ est le générateur éphémère précité (du fait que $[t] Q = [t.c] G = [c] P$).

La seconde clé publique $PK_T$ est donc bien une clé publique éphémère telle que prévue par le protocole PACE.

On remarque que le procédé qui vient d'être décrit ne prévoit pas le calcul du générateur éphémère $^{\ulcorner}$, mais l'obtention directe de la seconde clé publique $PK_T$, ce qui limite le nombre de multiplications d'un point de la courbe elliptique E par un scalaire nécessaires.

Une fois les clés publiques déterminées, les première et seconde entités électroniques 1, 10 peuvent construire un secret partagé K par un algorithme de négociation de clé (en anglais : *"key agreement"*) de type ECDH (pour "*Elliptic Curve Diffie-Hellman*") comme décrit à présent.

La première entité électronique 1 émet la première clé publique PKc à destination de la seconde entité électronique 10 via le canal de communication 12 (étape E40).

La seconde entité électronique 10 reçoit ainsi la première clé publique PKcà l'étape E42.

La seconde entité électronique 10 peut alors déterminer à l'étape E44 le secret partagé K en effectuant le produit de la première clé publique PKc par la clé privée $k_T$ (mémorisée dans la seconde entité électronique 10) : $K = [k_T] PKc$.

La seconde entité électronique 10 transmet par ailleurs à l'étape E46 la seconde clé publique $PK_T$ à destination de la première entité électronique 1 via le canal de communication 12.

La première entité électronique 1 reçoit ainsi la seconde clé publique $PK_T$ (via l'interface de communication 8) à l'étape E48.

La première entité électronique 1 peut alors déterminer à l'étape E50 le secret partagé K en effectuant le produit de la seconde clé publique $PK_T$ par la clé privée kc (mémorisée dans la première entité électronique 1). On a en effet : $K = [k_C] PK_T = [k_C.k_T]^{\ulcorner} = [k_T] PK_C$.

On remarque que l'exemple qui vient d'être décrit présente un ordre particulier de mise en œuvre des différentes étapes, mais que d'autres modes de réalisation sont possibles en variante.

Par exemple, les étapes E12 à E18 peuvent être effectuées après ou concomitamment aux étapes E20 à E26.

De même, les étapes E40 à E44 peuvent en variante être exécutées après ou concomitamment aux étapes E46 à E50.

Selon d'autres variantes encore, les étapes E2 et E4 à E10 peuvent être respectivement exécutées à d'autres moments dans le logigramme avant les étapes E28 et E34.

La figure 3 est un logigramme illustrant un second exemple de procédé de génération d'une clé publique $PK_C$ et de construction d'un secret partagé K conforme à l'invention.

Comme cela ressortira de l'explication qui suit, ce procédé permet de produire le secret partagé K en conformité avec le protocole PACE dans le cas de l'utilisation du processus dénommé *"Integrated Mapping"*.

Le procédé débute par une étape E60 de génération par tirage aléatoire d'un premier nombre aléatoire s au sein de la première entité électronique 1 (cette étape étant donc ici mise en œuvre par le processeur 2).

La première entité électronique 1 (en pratique le processeur 2) applique alors au premier nombre aléatoire s un algorithme cryptographique de chiffrement $E_\pi$ (étape E62) de manière à obtenir une version chiffrée z du premier nombre aléatoire s : $z = E_\pi (s)$. L'algorithme de chiffrement $E_\pi$ utilisé par la première entité électronique 1 peut être lié en pratique à un mot de passe $\pi$, qui correspond par exemple à des caractères imprimés sur la première entité électronique 1 (lorsque cette première entité électronique 1 est un document électronique d'identité) ou sur un document électronique d'identité équipé de la première entité électronique 1.

La première entité électronique 1 émet la version chiffrée z sur le canal de communication 12 (c'est-à-dire via l'interface de communication 8) à destination de la seconde entité électronique 10 (étape E64).

La version chiffrée z est reçue par la seconde entité électronique 10 à l'étape E66.

La seconde entité électronique 10 applique alors un algorithme cryptographique de déchiffrement $E_\pi^{-1}$ à la version chiffrée z (étape E68) afin d'obtenir le premier nombre aléatoire s. L'algorithme cryptographique de déchiffrement $E_\pi^{-1}$ est donc l'algorithme inverse de l'algorithme de chiffrement En.

Dans l'exemple décrit ici, la seconde entité électronique 10 reçoit le mot de passe $\pi$ (par exemple par saisie sur une interface utilisateur de la seconde entité électronique 10, ici un terminal T comme déjà indiqué, ou par lecture du mot de passe $\pi$ sur la première entité électronique 1 au moyen d'un dispositif de lecture optique, en particulier lorsque le mot de passe $\pi$ correspond par exemple à des caractères imprimés sur la première entité électronique 1 comme indiqué plus haut).

La seconde entité électronique 10 peut ainsi déterminer l'algorithme cryptographique de déchiffrement $E_\pi^{-1}$ en fonction du mot de passe $\pi$ reçu. (En pratique, le mot de passe $\pi$ est appliqué, en sus de la version chiffrée z, comme paramètre d'une fonction cryptographique prédéfinie.)

La seconde entité électronique 10 génère à l'étape E70 un second nombre aléatoire t par tirage aléatoire.

La seconde entité électronique 10 émet le second nombre aléatoire t à destination de la première entité électronique 1 via le canal de communication 12 (étape E72).

La première entité électronique 1 reçoit ainsi le second nombre aléatoire t (via l'interface de communication 8) à l'étape E74.

La première entité électronique 1 (en pratique le processeur 2) détermine à l'étape E76 un premier nombre intermédiaire a en multipliant une clé privée $k_C$ par le cofacteur h : $a = k_C.h$ . Cette multiplication s'entend dans le corps fini F. La clé privée kc est par exemple une clé privée éphémère obtenue par tirage aléatoire au sein de la première entité électronique 1 (ici par le processeur 2).

De son côté, la seconde entité électronique 10 détermine à l'étape E78 un second nombre intermédiaire a' en multipliant une clé privée $k_T$ par le cofacteur h : a' = $k_T.h$ . Cette multiplication s'entend dans le corps fini F. La clé privée $k_T$ est par exemple une clé privée éphémère obtenue par tirage aléatoire au sein de la seconde entité électronique 10.

La première entité électronique 1 (en pratique le processeur 2) détermine à l'étape E80 la (première) clé publique $PK_C$ en effectuant une multiplication d'un point ECH(s,t) de la courbe elliptique E par le premier nombre intermédiaire a (obtenu à l'étape E76) : PKc = [a] ECH(s,t).

Ce point de la courbe elliptique ECH(s,t) est déterminé en appliquant, au premier nombre aléatoire s et au second nombre aléatoire t, une fonction de hachage ECH à valeurs sur la courbe elliptique E (c'est-à-dire une fonction de hachage ECH dont l'ensemble image est inclus dans la courbe elliptique E). Cette fonction de hachage ECH est par exemple une fonction d'encodage prévue par le protocole PACE.

La seconde entité électronique 10 détermine quant à elle à l'étape E82 une seconde clé publique $PK_T$ en effectuant une multiplication du point ECH(s,t) par le second nombre intermédiaire a' :

$$PK_T = [a'] ECH(s,t).$$

On remarque que le générateur éphémère y prévu dans le cadre du processus dénommé *"Integrated Mapping"* (y = [h] ECH(s,t)) n'est pas calculé en tant que tel au cours du présent procédé. On évite ainsi la mise en œuvre de multiplications de points de la courbe elliptique par un scalaire à la fois pour déterminer le générateur éphémère y et ensuite pour déterminer la clé publique à partir du générateur éphémère y.

Pour autant, on obtient une clé publique $PK_C$ (pour la première entité électronique 1, ou $PK_T$ pour la seconde entité électronique 10) conforme à ce qui est prévu par le protocole PACE dans le cas de l'utilisation du processus dénommé "*Integrated Mapping".*

Une fois les clés publiques déterminées, les première et seconde entités électroniques 1, 10 peuvent construire un secret partagé K par un algorithme de négociation de clé (en anglais : *"key agreement"*) de type ECDH (pour *"Elliptic Curve Diffie-Hellman"*) comme décrit à présent.

La première entité électronique 1 émet la première clé publique PKc à destination de la seconde entité électronique 10 via le canal de communication 12 (étape E84).

La seconde entité électronique 10 reçoit ainsi la première clé publique PKcà l'étape E86.

La seconde entité électronique 10 peut alors déterminer à l'étape E88 le secret partagé K en effectuant le produit de la première clé publique PKc par la clé privée éphémère $k_T$ : K = [$k_T$] PKc.

La seconde entité électronique 10 transmet par ailleurs à l'étape E90 la seconde clé publique $PK_T$ à destination de la première entité électronique 1 via le canal de communication 12.

La première entité électronique 1 reçoit ainsi la seconde clé publique $PK_T$ (via l'interface de communication 8) à l'étape E92.

La première entité électronique 1 peut alors déterminer à l'étape E94 le secret partagé K en effectuant le produit de la seconde clé publique $PK_T$ par la clé privée éphémère kc. On a en effet : K = [$k_C$] $PK_T$ = [$k_C.k_T$] y = [$k_T$] $PK_C$.

On remarque que l'exemple qui vient d'être décrit présente un ordre particulier de mise en œuvre des différentes étapes, mais que d'autres modes de réalisation sont possibles en variante.

Par exemple, les étapes E60 à E68 peuvent être effectuées après ou concomitamment aux étapes E70 à E74.

De même, de manière alternative les étapes E84 à E88 peuvent être exécutées après ou concomitamment aux étapes E90 à E94.

Selon d'autres variantes, les étapes E60, E62 à E68 et E70 à E74 peuvent être respectivement exécutées à d'autres moments dans le logigramme avant les étapes E80 et E82.

Le secret partagé K obtenu par le procédé de la figure 2 ou le procédé de la figure 3 peut être utilisé au sein d'un algorithme cryptographique, par exemple un algorithme cryptographique de chiffrement ou de déchiffrement. En pratique, l'une des deux entités électronique 1, 10 peut par exemple appliquer un algorithme cryptographique de chiffrement utilisant le secret partagé K à des données (dites *"données initiales")* et transmettre les données chiffrées à l'autre des deux entités électroniques 1, 10 ; les données chiffrées sont ainsi reçues par l'autre entité électronique et l'autre entité électronique peut alors appliquer un algorithme cryptographique de déchiffrement utilisant le secret partagé aux données (chiffrées) reçues afin de retrouver les données initiales.

Selon une autre application envisageable, le secret partagé K obtenu par le procédé de la figure 2 ou le procédé de la figure 3 peut être utilisé au sein d'un algorithme cryptographique de dérivation de clé, par exemple afin de dériver une clé de chiffrement et/ou une clé de calcul d'intégrité.

## Revendications

1. Procédé de génération d'une clé publique ($PK_C$) égale au produit d'un générateur éphémère par un scalaire formant une clé privée ($k_C$), le générateur éphémère étant un point d'une courbe elliptique et la clé privée ($k_C$) étant un élément d'un corps fini, **caractérisé en ce qu'**il comprend les étapes suivantes :

   - obtention (E28 ; E30 ; E76) d'un nombre (a ; b) par multiplication, dans le corps fini, de la clé privée (kc) par un autre élément (h ; s ; c) du corps fini ;
   - obtention (E32 ; E80) de la clé publique ($PK_C$) en effectuant un traitement impliquant au moins le produit d'un autre point (ECH(s,t) ; G ; P) de la courbe elliptique par le nombre obtenu (a ; b).

2. Procédé selon la revendication 1, comprenant une étape (E2 ; E12) de détermination de l'autre élément (s ; c) par tirage aléatoire.

3. Procédé selon la revendication 1 ou 2, dans lequel la courbe elliptique est définie par un ensemble de paramètres comprenant un générateur (G) et dans lequel l'autre point de la courbe elliptique est ledit générateur (G).

4. Procédé selon la revendication 1 ou 2, comprenant une étape (E28) d'obtention d'un autre nombre (a) par multiplication, dans le corps fini, de la clé privée ($k_C$) par un élément supplémentaire (s) du corps fini.

5. Procédé selon la revendication 4, dans lequel la courbe elliptique est définie par un ensemble de paramètres comprenant un générateur (G) et dans lequel ledit traitement est conçu pour déterminer la somme, sur la courbe elliptique, du produit du générateur (G) par l'autre nombre (a), et du produit de l'autre point (P) par ledit nombre obtenu (b).

6. Procédé selon l'une des revendications 1, 2, 4 et 5, comprenant une étape (E26) de réception de données représentant l'autre point (P) en provenance d'un partenaire de communication (10).

7. Procédé selon la revendication 1, dans lequel la courbe elliptique est définie par un ensemble de paramètres comprenant un cofacteur (h) et dans lequel l'autre élément est ledit cofacteur (h).

8. Procédé selon la revendication 1 ou 7, comprenant une étape d'obtention de l'autre point (ECH(s,t)) par application d'une fonction de hachage (ECH) ayant un ensemble image inclus dans la courbe elliptique.

9. Procédé de construction d'un secret partagé (K) entre un premier partenaire de communication (1) et un second partenaire de communication (10), comprenant les étapes suivantes :

   - génération, par le premier partenaire de communication (1), d'une première clé publique ($PK_C$) au moyen d'un procédé conforme à l'une des revendications 1 à 8 ;
   - émission (E40 ; E84), par le premier partenaire de communication (1), de la première clé publique ($PK_C$) à destination du second partenaire de communication (10) ;
   - réception (E48 ; E92), par le premier partenaire de communication (1), d'une seconde clé publique ($PK_T$) en provenance du second partenaire de communication (10) ;
   - construction du secret partagé (K) en effectuant le produit de la seconde clé publique ($PK_T$) par ladite clé privée (kc).

10. Entité électronique (1) apte à générer une clé publique ($PK_C$) égale au produit d'un générateur éphémère par un scalaire formant une clé privée (kc), le générateur éphémère étant un point d'une courbe elliptique et la clé privée ($k_C$) étant un élément d'un corps fini, **caractérisée en ce qu'**elle comprend un processeur (2) programmé pour :

   - obtenir un nombre (a ; b) par multiplication, dans le corps fini, de la clé privée (kc) par un autre élément (h ; s ; c) du corps fini ; et pour
   - obtenir la clé publique ($PK_C$) en effectuant un traitement impliquant au moins le produit d'un autre point (ECH(s,t) ; G ; P) de la courbe elliptique par le nombre obtenu (a ; b).

## Patentansprüche

1. Verfahren zur Erzeugung eines öffentlichen Schlüssels ($PK_C$), der gleich dem Produkt eines ephemeren Erzeugers mit einem einen privaten Schlüssel ($k_c$) bildenden Skalar ist, wobei der ephemere Erzeuger ein Punkt einer elliptischen Kurve ist und der private Schlüssel ($k_c$) ein Element eines endlichen Körpers ist, **dadurch gekennzeichnet, dass** es die folgenden Schritte umfasst:

   - Erhalten (E28; E30; E76) einer Zahl (a; b) durch Multiplikation des privaten Schlüssels ($k_c$) mit einem anderen Element (h; s; c) des endlichen Körpers im endlichen Körper;
   - Erhalten (E32; E80) des öffentlichen Schlüssels ($PK_C$) durch Ausführen einer Verarbeitung, in der mindestens das Produkt eines weiteren Punktes (ECH(s, t); G; P) der elliptischen Kurve mit der erhaltenen Zahl (a; b) einbezogen wird.

**2.** Verfahren nach Anspruch 1, umfassend einen Schritt (E2; E12) des Bestimmens des anderen Elements (s; c) durch zufällige Ziehung.

**3.** Verfahren nach Anspruch 1 oder 2, wobei die elliptische Kurve durch einen Satz von Parametern definiert wird, der einen Erzeuger (G) umfasst, und wobei der andere Punkt der elliptischen Kurve der Erzeuger (G) ist.

**4.** Verfahren nach Anspruch 1 oder 2, umfassend einen Schritt (E28) des Erhaltens einer weiteren Zahl (a) durch Multiplikation des privaten Schlüssels ($k_C$) mit einem zusätzlichen Element (s) des endlichen Körpers in dem endlichen Körper.

**5.** Verfahren nach Anspruch 4, wobei die elliptische Kurve durch einen Satz von Parametern definiert wird, der einen Erzeuger (G) umfasst, und wobei die Verarbeitung zum Bestimmen der Summe aus dem Produkt des Erzeugers (G) mit der anderen Zahl (a) und dem Produkt des anderen Punkts (P) mit der erhaltenen Zahl (b) auf der elliptischen Kurve ausgelegt ist.

**6.** Verfahren nach einem der Ansprüche 1, 2, 4 und 5, umfassend einen Schritt (E26) des Empfangens von den anderen Punkt (P) repräsentierenden Daten von einem Kommunikationspartner (10).

**7.** Verfahren nach Anspruch 1, wobei die elliptische Kurve durch einen Satz von Parametern definiert wird, der einen Kofaktor (h) enthält, und wobei das andere Element der Kofaktor (h) ist.

**8.** Verfahren nach Anspruch 1 oder 7, umfassend einen Schritt des Erhaltens des anderen Punkts (ECH(s, t)) durch Anwenden einer Hash-Funktion (ECH), die eine in der elliptischen Kurve enthaltene Bildmenge hat.

**9.** Verfahren zur Generierung eines geteilten Geheimnisses (K) zwischen einem ersten Kommunikationspartner (1) und einem zweiten Kommunikationspartner (10), umfassend die folgenden Schritte:

- Erzeugung eines ersten öffentlichen Schlüssels ($PK_C$) durch den ersten Kommunikationspartner (1) mittels eines Verfahrens nach einem der Ansprüche 1 bis 8;
- Senden (E40; E84) des ersten öffentlichen Schlüssels ($PK_C$) an den zweiten Kommunikationspartner (10) durch den ersten Kommunikationspartner (1);
- Empfangen (E48; E92) eines zweiten öffentlichen Schlüssels ($PK_T$) von dem zweiten Kommunikationspartner (10) durch den ersten Kommunikationspartner (1);

- Generierung des geteilten Geheimnisses (K) durch Bilden des Produkts des zweiten öffentlichen Schlüssels ($PK_T$) mit dem privaten Schlüssel ($k_C$).

**10.** Elektronische Einheit (1), die zur Erzeugung eines öffentlichen Schlüssels ($PK_C$) ausgelegt ist, der gleich dem Produkt eines ephemeren Erzeugers mit einem einen privaten Schlüssel ($k_C$) bildenden Skalar ist, wobei der ephemere Erzeuger ein Punkt einer elliptischen Kurve ist und der private Schlüssel ($k_C$) ein Element eines endlichen Körpers ist, **dadurch gekennzeichnet, dass** sie einen Prozessor (2) umfasst, der dazu programmiert ist:

- durch Multiplikation des privaten Schlüssels ($k_C$) mit einem anderen Element (h; s; c) des endlichen Körpers im endlichen Körper eine Zahl (a; b) zu erhalten; und dazu
- durch Ausführen einer Verarbeitung, in der mindestens das Produkt eines weiteren Punktes (ECH(s,t); G; P) der elliptischen Kurve mit der erhaltenen Zahl (a; b) einbezogen wird, den öffentlichen Schlüssels ($PK_C$) zu erhalten.

**Claims**

**1.** A method for generating a public key ($PK_C$) equal to the product of an ephemeral generator times a scalar forming a private key ($k_C$), the ephemeral generator being a point of an elliptic curve and the private key ($k_C$) being an element of a finite field, **characterized in that** it comprises the following steps:

- obtaining (E28; E30; E76) a number (a; b) by multiplying, within the finite field, the private key ($k_C$) by another element (h; s; c) of the finite field;
- obtaining (E32; E80) the public key ($PK_C$) by performing processing involving at least the product of another point (ECH(s,t); G; P) on the elliptic curve times the number obtained (a; b).

**2.** The method according to claim 1, comprising a step (E2; E12) of determining the other element (s; c) by random draw.

**3.** The method according to claim 1 or 2, wherein the elliptic curve is defined by a set of parameters comprising a generator (G) and wherein the other point on the elliptic curve is said generator (G).

**4.** The method according to claim 1 or 2, comprising a step (E28) of obtaining another number (a) by multiplying, within the finite field, the private key ($k_C$) by an additional element (s) of the finite field.

**5.** The method according to claim 4, wherein the elliptic curve is defined by a set of parameters comprising a generator (G) and wherein said processing is designed to determine the sum, on the elliptic curve, of the product of the generator (G) times the other number (a), and of the product of the other point (P) by said obtained number (b).

6. The method according to one of the claims 1, 2, 4 and 5, comprising a step (E26) of receiving data representative of the other point (P) from a communication partner (10).

7. The method according to claim 1, wherein the elliptic curve is defined by a set of parameters comprising a cofactor (h) and wherein the otherelement is said cofactor (h).

8. The method according to claim 1 or 7, comprising a step of obtaining the other point (ECH(s,t)) by applying a hash function (ECH) having an image set included in the elliptic curve.

9. A method for constructing a shared secret (K) between a first communication partner (1) and a second communication partner (10), comprising the following steps:

   - generating, by the first communication partner (1), a first public key ($PK_c$) by means of a method according to one of the claims 1 to 8;
   - issuing (E40; E84), by the first communication partner (1), the first public key ($PK_c$) to the second communication partner (10);
   - receiving (E48; E92), by the first communication partner (1), a second public key ($PK_T$) from the second communication partner (10);
   - constructing the shared secret (K) by finding the product of the second public key ($PK_T$) times said private key ($k_c$).

10. An electronic entity (1) capable of generating a public key ($PK_c$) equal to the product of an ephemeral generator times a scalar forming a private key ($k_c$), the ephemeral generator being a point of an elliptic curve and the private key ($k_c$) being an element of a finite field, **characterized in that** it comprises a processor (2) programmed to:

   - obtain a number (a; b) by multiplying, within the finite field, the private key ($k_c$) by another element (h; s; c) of the finite field; and to
   - obtain the public key ($PK_c$) by performing processing involving at least one product of another point (ECH(s,t); G; P) on the elliptic curve times the number obtained (a; b).

# Fig.1

# Fig.3

# Fig.2

T          C

$$GEN.s \quad E2$$

$$z \leftarrow E_\pi(s) \quad E4$$

E8    REC.z   ← z ←   EM.z    E6

E10    $s \leftarrow E_\pi^{-1}(z)$       GEN.c    E12

$$Q \leftarrow [c]\,G \quad E14$$

E18    REC.Q   ← Q ←   EM.Q    E16

E20    GEN.t

E22    $P \leftarrow [t]\,G$

E24    EM.P   — P →   REC.P    E26

E34    $a' \leftarrow k_T.s$       $a \leftarrow k_C.s$    E28

E36    $b' \leftarrow k_T.t$       $b \leftarrow k_C.c$    E30

E38    $PK_T \leftarrow [a']G + [b']Q$       $PK_C \leftarrow [a]G + [b]P$    E32

E42    REC.$PK_C$   ← $PK_C$ ←   EM.$PK_C$    E40

E44    $K \leftarrow [k_T]PK_C$

E46    EM.$PK_T$   — $PK_T$ →   REC.$PK_T$    E48

$$K \leftarrow [k_C]PK_T \quad E50$$

**EP 3 809 627 B1**

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- iPIN and mTAN for Secure eID Applications. **JOHANNES BRAUN et al.** INFORMATION SECURITY PRACTICE AND EXPERIENCE. SPRINGER BERLIN HEIDELBERG, 09 Avril 2012, 259-276

- Scalar-multiplication algorithms. **P. SCHWABE.** ECC 2013 Summer School. Radboud University Nijmegen, 11 Septembre 2013